# EUROPEAN PATENT APPLICATION

(11) **EP 4 521 510 A2**
(43) Date of publication of application: **12.03.2025**
(21) Application number: 24198723.9
(22) Date of filing: 05.09.2024
(51) Int. Cl.: H01M 10/42, H01M 10/48

(54) **MEASURING ATTACHMENT FOR BATTERIES**

(30) Priority: 06.09.2023 GB 202313602
(71) Applicant: Services Pétroliers Schlumberger, 75007 Paris (FR); Schlumberger Technology B.V., 2514 JG The Hague (NL)
(72) Inventor: Hird, Jonathan Robert, Cambridge, CB3 0EL (GB); Robinson, Andrew, Cambridge, CB3 0EL (GB); Campos de Faria, Debora, Cambridge, CB3 0EL (GB)
(74) Representative: Schlumberger Intellectual Property Department

(57) **Abstract**

A battery which has electrodes and electrolyte inside a rigid outer container is fitted with a sensor device in the form of a strap at the exterior of the container. The strap has a strain gauge secured to the strap to observe strain on stretching the strap. The strap incorporates a tightening mechanism for reducing a length of the strap. After the strap has been put in place at the exterior of the container, the tightening mechanism is used to pull the strap taut with a length of the strap pressing against the exterior of the container. The strain gauge may be used to monitor expansion of the outer container during charging and thus indicate state of charge or to monitor expansion during the working life of the battery and this indicates its state of health. The sensor devices may be used for a large number of batteries storing electricity on grid scale, with electronics attached to each strap communicating wirelessly with a battery management system.

## Description

### CROSS-REFERENCE TO RELATED APPLICATIONS

The subject disclosure claims priority from GB Application No.: GB2313602.1, filed on September 6, 2023, herein incorporated by reference in its entirety.

### FIELD

This disclosure relates to a device and method for attaching a strain gauge to the exterior of a rigid battery for storing electrical energy. One area of application is in monitoring states of charge and/or states of health within a large battery installation.

### BACKGROUND

Battery storage of electrical energy which has been generated for supply to an electricity grid, sometimes referred to as grid scale, may involve an installation with hundreds or even thousands of individual electrochemical cells, which may be wired in series. For knowing the state of health and state of charge of the installation, it would be useful to understand the performance of each cell under both charge and discharge conditions. This is data that could be used by a battery management system to optimize performance of the energy storage system. However, to monitor every cell becomes difficult and expensive due to the number of sensors and wiring that is required. Instead, a compromise may be made in which a small subset of cells is instrumented.

There are a number of battery types, with differing electrochemical systems, in widespread use. Other types are being developed. The electrochemical systems of some battery types are such that during charge or at some other time during use, the outer container of the battery is subjected to internal force which urges the outer container to expand.

One example of a battery system where internal pressure can be created during charging is a metal hydrogen battery. This type of battery liberates hydrogen gas at the cathode during charging. In some forms of metal hydrogen battery, this released hydrogen gas is retained within the cell and the pressure within the cell indicates the state of charge. A sealed battery of this type is shown by US patent 3669744 entitled "Hermetically sealed cell". Subsequent patents relating to batteries of this type are US3867199, US4117206 and US4517264. These documents are incorporated herein by reference.

A different example of a battery system where there can be internal force on the outer container is a lithium ion battery. These are now widely used, and there are a number of types with different materials used for electrodes. In such a battery, lithium ions move between the electrodes during charging and discharge. Lithium ions arriving at the negative electrode during charging become intercalated within the electrode or in some battery chemistries form an alloy. The absorption of lithium within an electrode can cause considerable expansion of the electrode and hence force on the cell container. Michelini et al in "Experimental Investigation on Reversible Swelling Mechanisms of Lithium-Ion Batteries under a Varying Preload Force" in the journal "Batteries", vol 9 page 218 (2023) reported reversible swelling of lithium-ion pouch cells during charging and also irreversible swelling with repeated change and discharge cycles.

A similar issue of swelling may arise and possibly be even greater with other battery types. One possibility is a lithium ion battery using silicon or a material containing silicon as an electrode. Another is a lithium sulphur battery. In this type of battery, lithium ions move between the electrodes but the cathodic material is sulphur. Yet further instances where swelling may arise are batteries in which ions of an alkali metal other than lithium, i.e. sodium or potassium ions, move between the electrodes as the battery is charged or discharged. The swelling may even be greater with these ions because they are larger than lithium ions.

It is known to use a strain gauge to observe the expansion of a battery's container as a way to observe the state of charge of the battery. One or more strain gauges may be applied to the outer container of the battery with adhesive.

### SUMMARY

This summary is provided to introduce concepts that will be further elaborated and described below in the detailed description. This summary is not intended to identify key or essential features of the claimed subject matter, nor is it intended to be used as an aid in limiting the scope of the claimed subject matter.

In one aspect, the present disclosure provides an assembly comprising: an electrochemical energy storage cell, i.e. a battery, comprising at least one electrode and electrolyte within a rigid container, and a sensor device comprising a strap at the exterior of the container and a strain gauge fastened to the strap, wherein the strap includes a tightening mechanism for reducing a length of the strap, the strap and its tightening mechanism being configured so that reducing the overall length pulls the strap taut with at least a length of the strap pressing against the exterior of the container. The strain gauge which is fastened to the strap is stretched as the strap is stretched by expansion of the container.

In another aspect, this disclosure provides a method of equipping an electrochemical storage cell, i.e. a battery, for monitoring swelling of an outer container of the cell. The method comprises fitting at the exterior of the container a sensor device comprising: a strap with a strain gauge secured to the strap in an orientation to observe strain on stretching the strap and an electronic package to collect measurement data from the strain gauge, wherein the strap comprises a tightening mechanism for reducing a length of the strap; operating the tightening mechanism to reduce the overall length of the strap until the strap is taut with at least a length of the strap pressing against the exterior of the container; and connecting the electronic package to a battery management system configured for the electronic package to transmit measurement data from the strain gauge to the battery management system.

The battery may be such that passage of electric current through the cell while it is being charged leads to outward force on the interior of the battery's container, urging it to expand, in which case the expansion of the container further tightens and so stretches the strap. This can be measured by means of the strain gauge attached to the strap and may provide a measurement of the state of charge of the battery. The strap may be tightened against the exterior of the container while the battery is in an uncharged state. The strain gauge will then be able to observe expansion of the container as soon as that expansion begins and so indicate the state of charge of the battery. This minimizes or avoids the possibility that some initial expansion of the container is not observed because it takes place before there is any stretching of the strap and strain gauge.

The battery may be such that overcharge, or aging over many charge and discharge cycles, will lead to outward force on the interior of the battery's container and expansion of that container. In these circumstances, expansion of the container further tightens the strap. Observation of the expansion by means of the strain gauge may provide a warning of overcharging or may provide an indication of changes to the condition of the battery, often referred to as its state of health.

The strap will be placed under tension as the battery's container expands. Metal may be chosen as the material for the strap. It may be made from metal strip. The strap may be in one piece, which may be wrapped around the battery's container and then tightened into contact with it. It is also possible that the strap extends around the battery and an adjacent structure, thus fastening the battery to that structure. In this case a length of the strap is pulled against part of the surface of the battery container as it is tightened.

Another possibility is that the strap may have more than one piece, for instance being formed as two pieces which are attached to a structure near the battery, and joined together by the tightening mechanism.

The tightening mechanism may be such that it can be operated with a hand tool such as a screwdriver or with a hand-held power tool. Tightening may be brought about by rotation of an element of the mechanism with a helical screw thread. This helical thread could be the thread of a bolt extending between two parts of the strap or could be a worm gear engaging grooves in the strap to move one portion of the strap past another. With such mechanisms, tightening of the strap is reversible and the mechanisms can be operated to slacken the strap for removal, should that be required, using the same tools as were used to tighten the strap. However, in some embodiments the tightening mechanism might not be reversible, for instance if it included a ratchet.

Providing a strain gauge on a separate strap rather than using adhesive to attach it to the outer container of a battery may be simpler and more cost-effective, because it will avoid keeping a new battery (which may be much larger than a sensor device as disclosed herein) in a waiting state while adhesive sets. It may also be convenient in that batteries can be manufactured and transported to a place of intended use without requiring packing which is capable of protecting adhered strain gauges from accidental damage during transport and handling.

Reading the strain gauges and sending data to a battery management system could be done using wired connections. However, in some embodiments of this invention the sensor device also includes an electronics package capable of obtaining data from the strain gauge on the strap (usually by measuring its electrical resistance) and transmitting the observed data to a battery management system. So a further aspect of this disclosure is an assembly comprising an electrochemical energy storage cell comprising at least one electrode and electrolyte within a rigid container, where passage of electric current through the cell may lead to outward force on the interior of the container, urging it to expand; and a sensor device comprising a strap at the exterior of the container with a strain gauge secured to the strap in an orientation to observe strain on stretching the strap, wherein: the sensor device further comprises an electronics package attached to the strap and connected to the strain gauge to obtain measurement data therefrom, and the electronics package comprises means for communication with a battery management system, either wirelessly or using a shared data bus.

This aspect of the disclosure can also be stated as a method of equipping an electrochemical storage cell, i.e. a battery, for monitoring swelling of an outer container of the cell. The method comprises fitting at the exterior of the container a sensor device comprising a strap with a strain gauge secured to the strap in an orientation to observe strain on stretching the strap and an electronics package attached to the strap and connected to the strain gauge to obtain measurement data therefrom, and operating the electronics package to transmit measurement data from the strain gauge to a battery management system, the transmission being either wireless or using a wired data bus shared by a plurality of sensor devices.

### BRIEF DESCRIPTION OF THE DRAWINGS

The subject disclosure is further described in the detailed description which follows, in reference to the noted plurality of drawings by way of non-limiting examples of the subject disclosure, in which like reference numerals represent similar parts throughout the several views of the drawings, and wherein:
Fig 1 is a schematic cross section of a sealed nickel hydrogen battery;
Fig 2 shows an embodiment of a sensor device which is a one piece strap with a strain gauge;
Fig 3 shows an end portion of the battery of Fig 1 with a strap according to Fig 2 around it;
Fig 4 is a cross section on the line X-X of Fig 3, with the strap loosely fitted around the battery;
Fig 5 is a similar view to Fig 4, with the strap tightened onto the exterior of the battery;
Fig 6 shows another embodiment of a one piece strap with a strain gauge;
Fig 7 shows a sensor device which has a two-part strap holding a battery against a supporting structure;
Fig 8 shows another embodiment of a one piece strap holding a battery onto a different form of supporting structure;
Fig 9 illustrates several possibilities differing from Figs 2 to 8. It shows an end portion of a cylindrical lithium ion battery with a sensor device around it;
Fig 10 shows part of a sensor device similar to that of Fig 9, but with an electronics package which communicates using a wired data bus;
Fig 11 schematically illustrates components which may be included in an electronics package;
Fig 12 schematically illustrates a battery management system;
Fig 13 schematically illustrates part of a grid scale installation; and
Fig 14 is a flowchart summarizing a method which makes and uses a sensor device in accordance with this disclosure.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

This detailed description shows various embodiments of the present disclosure and possibilities which may be used. It should be appreciated that features or possibilities described in combination may, where it is practical to do so, be used individually. Also, features or possibilities described in any embodiment may be used in any other embodiment, in so far as it is practical to do so.

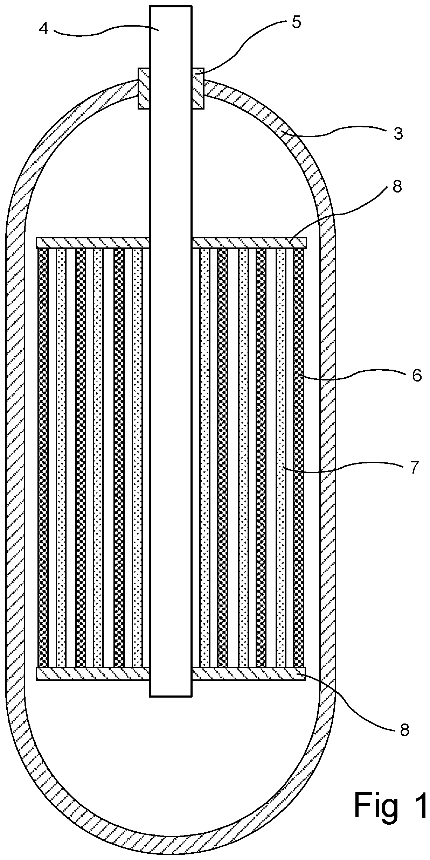

Metal hydrogen batteries have been known for a number of years. The metal is usually nickel, although published literature mentions that other metals can be used. Fig 1 is a schematic cross section of a sealed nickel hydrogen battery. The purpose of this figure is to show one possible arrangement of parts of a battery as an illustration, without showing specific constructional details. As already mentioned, a number of constructional arrangements have been shown in patents and other literature.

The battery has electrolyte and electrodes inside a sealed metal vessel 3 which is able to contain substantial internal pressure. The vessel 3 has domed ends and a cylindrical section between them. A metal rod 4 on the longitudinal axis of the pressure vessel 3 projects through an electrically insulating fitting 5 at one end of the vessel 3. Inside the vessel 3 are a first set of electrodes 6 which are connected together so that they are at the same electrical potential. These electrodes are electrically connected to the rod 4. A second set of electrodes 7, shown in Fig 1 with darker shading than the electrodes 6, are connected electrically to each other so as to be at the same electrical potential and are connected to the metal pressure vessel 3. The connections of electrodes 6 and 7 to the rod 4 and pressure vessel 3 are not shown. A porous separator material is sandwiched between the electrodes 6 and 7 and gas permeable membranes to facilitate movement of hydrogen gas may also be included between the electrodes. The porous separator material is saturated or partially saturated with liquid electrolyte which may be an aqueous solution of an alkali metal hydroxide. Although pluralities of electrodes 6 and 7 are shown in Fig 1, another possibility which is shown in an article by Chen et al "Nickel-hydrogen batteries for large-scale energy storage", PNAS vol115, pages 11694 to 11699 (2018) is that the positive and negative electrodes have the form of sheets with a sheet of the porous separator sandwiched between them. This sandwich is impregnated with the electrolyte and is wound in a coil around the central rod 4.

To charge the battery, a positive voltage is applied to the rod 4 and so to the electrodes 6 while the pressure vessel 3 is connected to electrical ground of the electricity supply, so that the electrodes 6 and 7 are respectively the positive and negative electrodes of the battery. The positive electrodes incorporate nickel hydroxide which is converted to an oxyhydroxide during charging. The negative electrode catalyzes the conversion of water to hydrogen. Several materials have been suggested for this electrode, including platinum or palladium black on a carrier structure. Methods for manufacture of the positive and negative electrodes are known and some are mentioned in the patents quoted earlier. The positive electrode containing nickel hydroxide may be of similar composition to those used in nickel cadmium batteries and the negative electrodes may be similar to electrodes used in fuel cells for converting hydrogen to electricity.

The electrochemical reactions during charging can be written as

Ni(OH)₂ + OH⁻ → NiOOH + H₂O + e⁻

H₂O + e⁻ → ½H₂ + OH⁻

These reactions are reversible and proceed in the opposite direction during discharge.

During charging, the released hydrogen increases the pressure within the vessel 3 and substantial pressure can build up, causing the vessel to expand. This expansion as a result of internal pressure is used to monitor the state of charge of the battery. Embodiments of apparatus for this purpose will now be described.

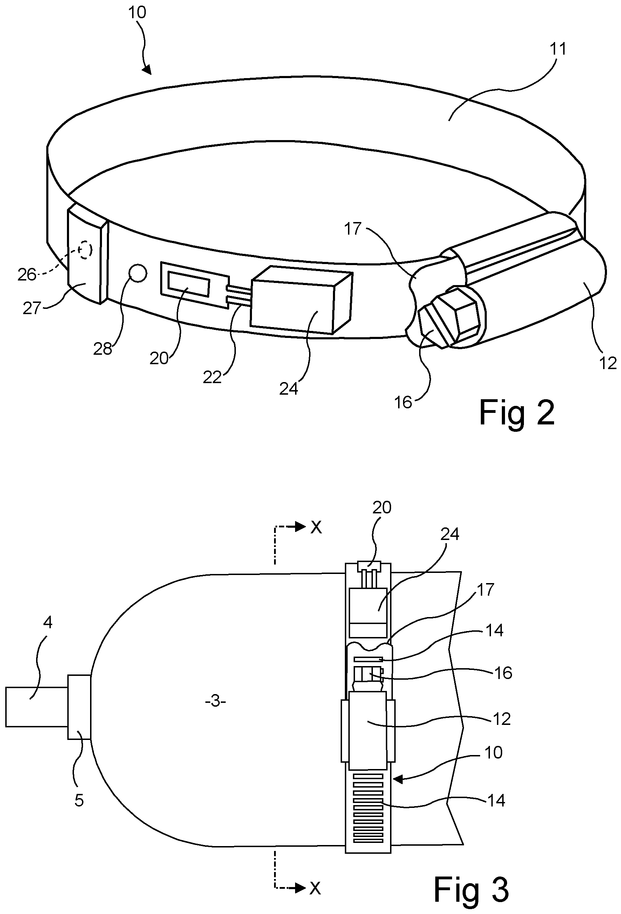

Figs 2 to 5 show a sensor device 10 in which a strap 11 is the band of a worm drive clip, sometimes referred to as a Jubilee clip. Such clips are commercially available and are often used for holding a flexible hose onto a rigid pipe. Manufacturers of such clips include Jubilee Clips Limited, Gillingham, Kent, UK. "Jubilee" is a Registered Trademark. The strap 11 is a stainless steel strip. A first end is enclosed within and secured to a housing 12 which is part of a tightening mechanism. A portion of the strip at the opposite second end passes through the housing 12, thus making the strip into a circular band. On the exterior of the band, along at least a portion of the strip extending from the second end, there is a succession of regularly spaced transverse grooves 14. These are engaged by a worm gear which is located inside the housing 12 and is another part of the tightening mechanism. An exposed head 16 of the worm gear has flat surfaces and a slot so that it can be turned with either a spanner or a screwdriver to pull the second end portion of the strip through the housing 12, thereby shortening the circumference of the band. In Fig 2 the second end of the strip is indicated at 17. The grooves 14 may be indentations into the strip or may be slots extending through it. These grooves 14 are shown in Fig 3 but for clarity have not been shown in Fig 2. The strap is longer than it is wide. More specifically its length extending around the circumference of the battery is more than four times its axial width.

A strain gauge 20 is fastened onto the strip 11 with epoxy resin adhesive. As can be seen from the drawings, it is on the exterior of the circular band formed by the strip. The strain gauge may be of conventional type, consisting of an electrical resistance on a flexible backing. When the backing and the resistance are stretched by stretching of the strap 11 under tension, the electrical resistance changes. The strain gauge may be chosen to have an electrical resistance of around 3KΩ so that its electrical power requirement is low. There are a number of circuits which can be used to measure changes in the electrical resistance. A Wheatstone bridge is commonly used. Some strain gauges consist only of one electrical resistance on a flexible backing. Others include additional resistors so that a whole Wheatstone bridge is present on the flexible backing. Both of these types may be used for the strain gauge 20.

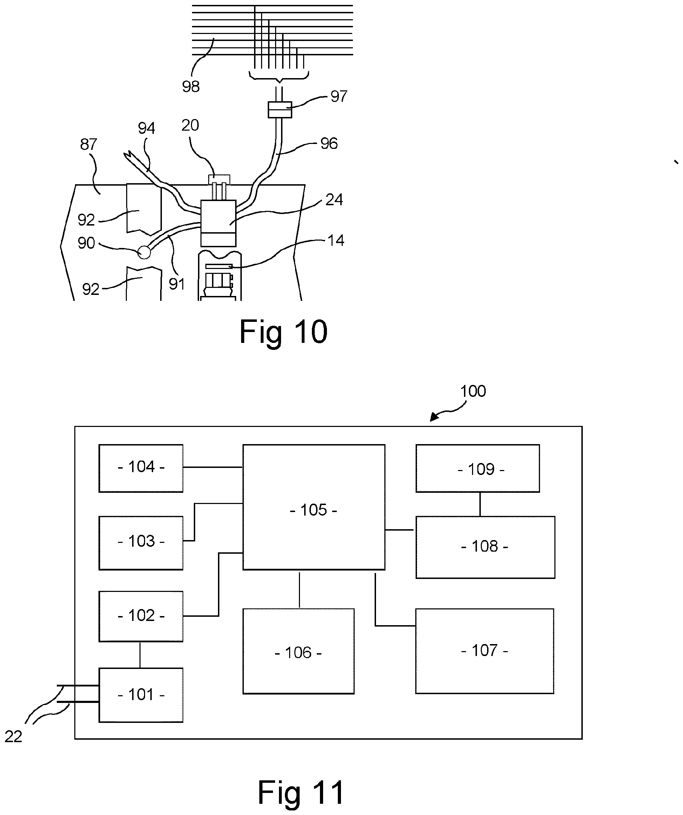

Also mounted on the strip 11 is a small housing 24 containing an electronics package 100 which is shown in Fig 10 and will be described in more detail below. The strain gauge 20 is connected by short wires 22 to this electronics package inside housing 24.

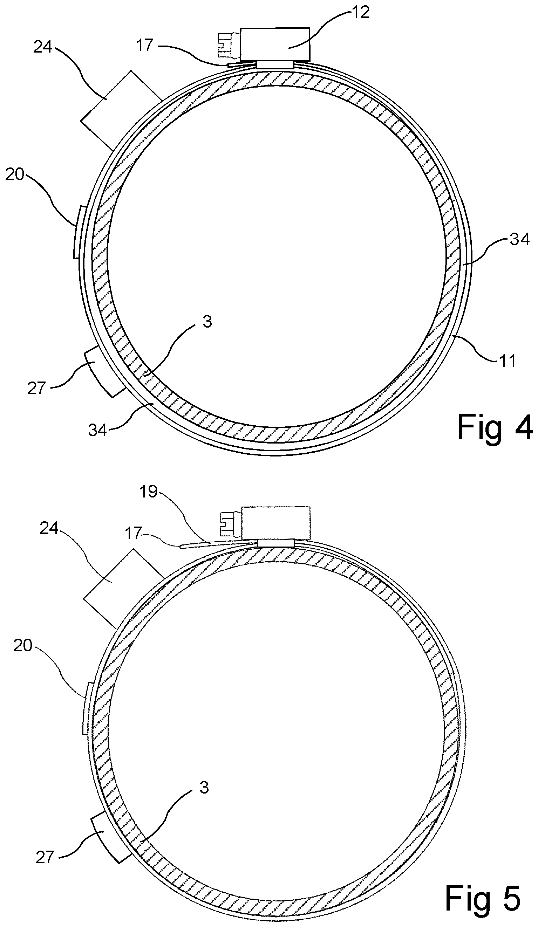

Fig 3 shows part of the exterior of a cylindrical pressure vessel 3 which is the outer container of a nickel hydrogen battery. This vessel 3 is strong enough to contain substantial internal pressure, and is rigid, so that its shape does not change significantly when it is under pressure from within. A sensor device 10 as shown in Fig 2 is fitted around the cylindrical part of the vessel 3. Figs 4 and 5 are cross sections on the line X-X of Fig 3, but internal structure and electrodes within the vessel 3, as for example shown in Fig 1 have been omitted. These Figs 4 and 5 show this sensor device 10 before and after it is tightened onto the pressure vessel 3. As seen in Fig 4, when the strip 11 is a loose fit around the vessel 3, there are gaps 34 between the vessel 3 and the strip 11. A short length of the strip 11 extends from the housing 12 to the end 17.

After the sensor device 10 has been placed on the vessel 3, the head 16 of the worm gear is turned to pull some of the strip 11 through the housing 12 until most of the strip 11 is firmly against the exterior of the vessel 3 as shown in Fig 5 where it can be seen that the length 19 of strip 11 between the housing 12 and the end 17 is longer than in Fig 4. Turning the head 16 to tighten the strip 11 may be done using a torque wrench so as to achieve a predetermined tightness of the strip 11 against the pressure vessel 3. Because the strip 11 is now in direct contact with the vessel 3 over almost all of its circumference, any expansion of the vessel 3 will further tension and so stretch the strip 11 and the strain gauge 20.

Also attached to the strip 11 are temperature sensors 26 and 28. These temperature sensors may be thermocouples, thermistors or small integrated circuits for measuring temperature and these are also connected to the electronics package 100 inside housing 24. These temperature sensors are provided because temperature changes of the pressure vessel 3 will also change the pressure within it, and hence affect the measured strain. Also, a strain gauge has a temperature dependence since resistance decreases with an increase in temperature. It is therefore useful to measure the temperature of the pressure vessel 3 and also ambient temperature to which the strain gauge 20 is exposed. Temperature sensor 26 is covered by heat insulating material 27, so that it measures the temperature of a part of the strip 11 in thermal contact with the vessel 3. Sensor 28 is not covered and measures the ambient temperature.

It will be appreciated that attaching a strain gauge to the outer container of a battery in this way does not require any modification of the battery itself and can be carried out as an assembly operation using simple tools. The tightening means is part of the sensor device. It remains in place after it has been used to tighten the strap and can be used to release the strap at a later time, should this be required.

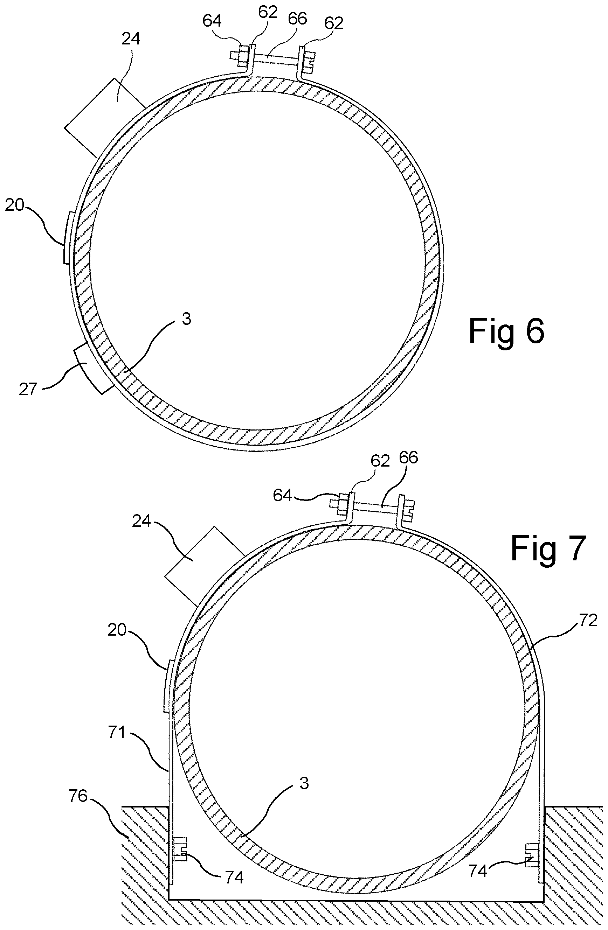

Fig 6 shows a sensor device where the strap is again a strip 11, but with a different mechanism for tightening the strip. At each end, the strip has a portion 62 which extends outwards. To tighten the strip, these portions are pulled together by tightening nut 64 on bolt 66. It will be appreciated that between the portions 62 there is a part of the circumference of the vessel 3 which is not in contact with the strip 11. Nevertheless, expansion of the vessel tightens and stretches the strip 11 so that the expansion can be measured by the strain gauge 20.

Fig 7 shows an arrangement in which the strap of a sensor device has two parts, 71 and 72. Each of these is made from a metal strip and has one end portion bolted at 74 to a rigid supporting structure 76 against which the vessel 3 is lying. The other ends of the two parts 71, 72 have outwardly extending portions 62 which are bolted together with bolt 66 and nut 64 as shown in Fig 6. Although this two-part strap is not in contact with the whole circumference of the vessel 3, expansion of the vessel 3 will stretch and increase tension in both parts 71, 72 of the strap and thereby stretch the strain gauge 20 adhered to part 71 of the strap.

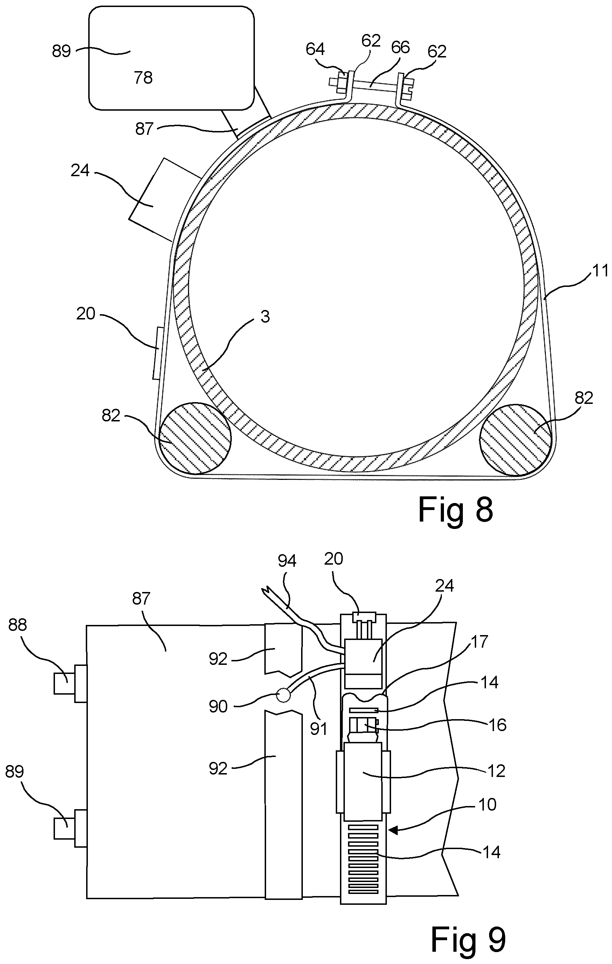

Fig 8 shows a further possibility. The pressure vessel 3 is lying on and supported by two horizontal rods 82 which are part of a fixed supporting structure. The strip 11 is in one piece with end portions 62 pulled together by a nut 64 and bolt 66 as in Fig 6. However, the strip 11 has sufficient length to pass around the rods 82, and thus secure the vessel 3 to these rods. The strain gauge 20 is attached to a part of the strip 11 which is not in direct contact with the vessel 3, but other parts of the strip 11 are in firm contact with the vessel 3 when the bolt and nut 66, 64 are tightened, and so the whole of the strip 11 is subjected to tension if the vessel 3 expands.

Fig 9 is somewhat similar to Fig 3 but also shows some differences from it. It shows a sensor device similar to that shown in Fig 2 fitted around a lithium ion cell which has a cylindrical outer container 87. Connections to the electrodes within the cell are shown at 88 and 89. The temperature sensor 26 shown in Fig 2 is not present. A temperature sensor 90, which may be a thermistor, a thermocouple or a temperature measuring integrated circuit, is connected to the electronics package 100 in housing 24 by a flexible lead 91. After the strap has been put in place around the container 87 and tightened into contact with that container, the temperature sensor 90 is fastened to the exterior of the container 87 with adhesive tape 92 (shown broken away in Fig 9 so that the temperature sensor 90 can be seen). The electronics package inside housing 24 is also connected to a power supply cable 94. After the strap 11 has been put in place around the container 87, this cable 94 is connected to low voltage DC power supply wiring provided on the structure which holds the batteries. The electronics package 100 within the housing 24 communicates wirelessly with a battery management system, such as the system 110 described further below.

A yet further possibility which is shown by Fig 10 is that the electronics package 100 within housing 24 is connected to a data cable 96. After the strip 11 has been put in place around the container 87, this data cable 96 is connected by a plug and socket connection 97 to a data bus 98 provided on the structure which holds the batteries. Other batteries on the structure are similarly equipped with sensor devices as shown in Fig 10 and are connected in the same way to the data bus 98 which is also connected to the battery management system. In Fig 10 the data bus is shown schematically as an eight wire data bus 98 and the data cable 96 also has eight wires which connect the electronics package 100 to the data bus 98.

It should be appreciated that any of the possibilities shown by Figs 9 and 10 could be used with sensor assemblies as shown by Figs 2 to 8.

All the above embodiments include the housing 24 containing an electronics package 100. This electronics package is an assembly of electronic components which may all be carried on a single circuit board. The electronics package measures the electrical resistance of the strain gauge 20 and also obtains measurements from the temperature sensors 26 and 28. Components of such an electronics package 100 are shown schematically in Fig 11. It has a partial circuit 101 which contains resistors and is connected to the wires 22 from strain gauge 20 so as to form a Wheatstone bridge. An instrumentation amplifier 102 is connected to that Wheatstone bridge. If all parts of a Wheatstone bridge are included in the strain gauge 20, the wires 22 will go directly to instrumentation amplifier 102. Further instrumentation amplifiers 103, 104 are connected to the temperature sensors 26 and 28.

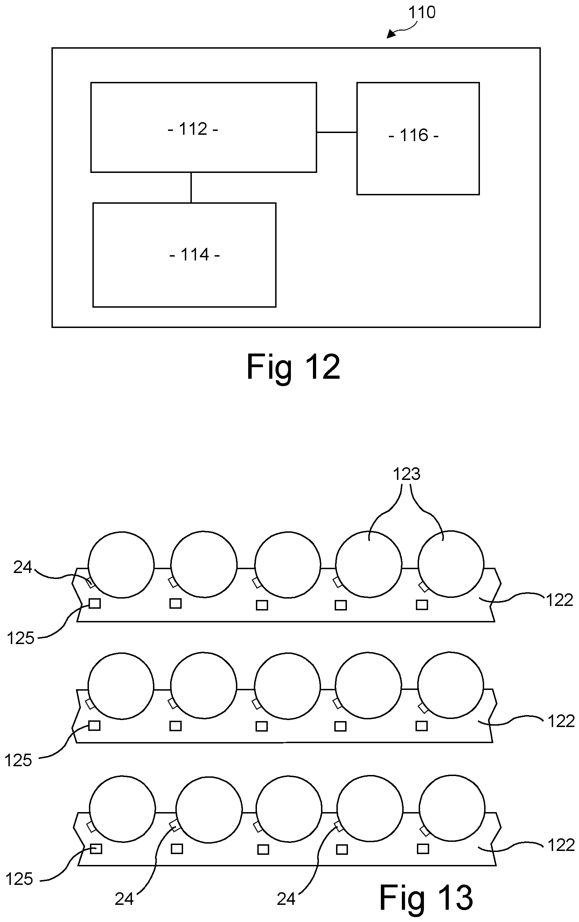

A microcontroller 106 receives the measurements from the instrumentation amplifiers 102, 103 and 104 and transmits the measurement data to a battery management system 110 which is shown by Fig 12 and which is separate from the battery or batteries equipped with a sensor device or assemblies as described above. The microcontroller 106 may include onboard memory or instead or additionally may be connected to separate memory 107.

The microcontroller 106 may communicate with the battery management system 110 over a wired connection. However, if the number of batteries fitted with sensor assemblies as described above is very large, as for a grid scale installation of batteries, individual wired connections would be complex. In some embodiments of sensor apparatus, the electronics package 100 is able to communicate wirelessly with the battery management system 110. The Bluetooth system for short range wireless communication would be suitable for such communication with the battery management system 110 because it has a low power requirement. So, if the electronics package does not have a wired data connection to the battery management system 110, the microcontroller 106 may include a Bluetooth interface or may be connected to a Bluetooth transmitting and receiving module 107 as shown in Fig 11. Other wireless transmission systems could be used as an alternative to Bluetooth. One such is LoRa and LoRaWAN which define a low power wireless communications system.

If the number of batteries is large, the wireless communication may be arranged to transmit from one electronics package 100 to another which relays the transmission onwards to the battery management system 110.

The strain gauge 20 and temperature sensors 26, 28 will require some electrical power as will the electronics package 100 in housing 24. In some circumstances this may be provided by a wired connection to a low voltage dc supply. This may be supplied through circuitry 108 which gives a stable dc voltage. However, there may be a preference to avoid adding low voltage wiring to a battery installation, for example, if sensor assemblies embodying the present disclosure are fitted to batteries in an existing installation, or where batteries are to be installed in accordance with an existing installation design. Moreover, for a grid scale installation a number of batteries may be connected in series and in consequence the outer containers of some batteries may be at a significant electrical potential relative to ground, which might make it desirable to avoid any wired connection to a sensor device.

If power is supplied wirelessly, the electronics package may include or be connected to a small rechargeable battery or a supercapacitor. Providing power wirelessly to charge this may be done using energy harvesting in which a remote transmitter emits radio frequency energy which is then received and harvested by the electronics package 100. This possibility is illustrated by Fig 8. An electrically insulating bracket is fastened to the strip 11. This bracket supports a small aerial 88 which is electrically connected to a rectifier circuit 109 within the electronics package 100. Another possibility is that the bracket supports a photocell which derives power from ambient light, which may be the artificial lighting of the building in which the battery is installed. Yet another possibility is that the electronics package may harvest power using a thermoelectric (Peltier) module which can produce electricity when opposing faces of the module are subject to a temperature differential. Wireless supply of power may also be performed using inductive coupling.

Fig 12 shows schematically that the battery management system 110 is computer based, having a processor 112, memory 114 and a Bluetooth or other wireless transmitter and receiver 116 for communicating with the electronics packages 100 of the sensor assemblies.

Fig 13 schematically illustrates a portion of a grid scale installation in which vertically spaced racks 122 support a large number of batteries 123. Portions of three racks 102 are shown in Fig 13. Each battery 123 is fitted with a sensor device 10 of the kind shown in Fig 2. The straps 11 of these assemblies are not visible in Fig 10 but the housings 24 for the electronics packages are seen. The sensor assemblies have been fitted so that these electronics packages are close to RFID tags 125 on the racks 122. There is one RFID tag 125 adjacent each location for a battery and each tag contains a unique code denoting that location. The electronics package 100 of each sensor device includes an RFID reader which is able to read the code held by the closest RFID tag 125 and incorporate this code into communications with the battery management system 110, so that this management system is able to identify the position of the battery for which data is being reported and will be able to continue doing so even if a battery and/or sensor device has to be replaced during maintenance of the installation.

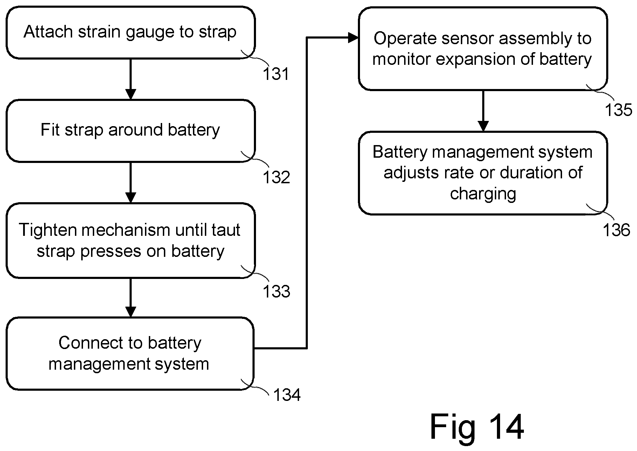

Fig 14 is a flowchart summarizing the steps of a method or procedure comprising equipping a battery with a sensor device. The first stage 131 is to construct a sensor device 10 by attaching a strain gauge 20, an electronics package 100 in housing 24 and temperature sensors 26, 28 to a strip 11 as described above. The next stage 132 is to fit the sensor device 10 onto a battery, followed at 133 by using the tightening mechanism to shorten the strap 11 until the strap is taut with at least a length of the strap pressing against the exterior of the battery's outer container. Step 134 is to make wired or wireless connection to a battery management system 110.

This can then be followed, at step 135 by operating the sensor device to monitor expansion of the battery during its use. As indicated at 136, the battery management system 110 may adjust the rate or duration of charging of the battery in response to data received from the sensor device.

Sensor devices embodying this disclosure may be used with any of the various battery types mentioned herein, specifically including nickel hydrogen and alkali metal ion batteries, but may also be used with any battery which undergoes swelling of its outer container during operation or progressively during its working life. The various embodiments of this disclosure which have been set out above are intended to assist understanding of this disclosure, but not to limit in any way the scope of this disclosure defined by the following claims.

## Claims

1. An assembly comprising:
an electrochemical energy storage cell comprising at least one electrode and electrolyte within a rigid container, where passage of electric current through the cell may lead to outward force on the interior of the container, urging it to expand; and
a sensor device comprising:
a strap at the exterior of the container with a strain gauge secured to the strap in an orientation to observe strain on stretching the strap and wherein the strap further comprises a tightening mechanism for reducing a length of the strap, the strap and tightening mechanism being configured so that reducing the overall length pulls the strap taut with at least a length of the strap pressing against the exterior of the container.

2. The assembly of claim 1, wherein the strap is a metal strip.

3. The assembly of claim 1 or 2, wherein the strap encircles the exterior of the container.

4. The assembly of any one of the preceding claims, wherein the strap has two parts attached together by the tightening mechanism and each of the parts is attached to structure adjacent the container.

5. The assembly of any one of the preceding claims, wherein the strap extends around both the container and structure adjacent the container.

6. The assembly of any one of the preceding claims, wherein the mechanism for tightening the strap comprises a rotatable element attached to a first portion of the strap and having a screw thread engaging a second portion of the strap, so that rotation of the element moves the second portion relative to the first portion.

7. The assembly of any one of the preceding claims, wherein the strap carries a temperature sensor to measure the temperature of the exterior of the container.

8. The assembly of any one of the preceding claims, wherein the sensor device further comprises an electronics package secured to the strap and connected to the strain gauge for obtaining measurements of strain, wherein the electronics package is preferably equipped for wireless data communication.

9. The assembly of any one of the preceding claims, wherein the electrochemical cell is a sealed metal-hydrogen battery and the container is a pressure vessel or wherein the electrochemical cell is an alkali metal ion battery.

10. The assembly of any one of the preceding claims, further comprising over a hundred electrochemical cells each comprising at least one electrode and electrolyte within a rigid container where passage of electric current through the cell may lead to outward force on the interior of the container, urging it to expand; and at least a majority of the cells are fitted with the sensor device, wherein preferably all the cells are fitted with the sensor device.

11. The assembly of claim 10, further comprising a battery management system controlling supply of charging current to the cells, wherein each sensor device comprises an electronics package connected to the strain gauge for measuring strain of the gauge and each electronics package is in wireless communication with the battery management system.

12. The assembly of claim 11, wherein each cell fitted with a sensor device is positioned adjacent to an RFID tag denoting a cell location and the electronics package is configured to read the RFID tag and communicate the identity of the tag when communicating with the battery management system.

13. A method of equipping an electrochemical storage cell for monitoring swelling of an outer container of the cell, such as an electrochemical storage cell of an assembly according to any one of the preceding claims, comprising:
fitting at the exterior of the container a sensor device comprising:
a strap with a strain gauge secured to the strap in an orientation to observe strain on stretching the strap and an electronics package to collect measurement data from the strain gauge, wherein the strap comprises a tightening mechanism for reducing a length of the strap;
operating the tightening mechanism to reduce the overall length of the strap until the strap is taut with at least a length of the strap pressing against the exterior of the container; and
connecting the electronics package to a battery management system configured for the electronics package to transmit measurement data from the strain gauge to the battery management system.

14. The method of claim 13, wherein the sensor device further comprises:
at least one temperature sensor positioned to sense temperature of the container and the electronics package is connected to the at least one temperature sensor and configured to transmit measurement data from the at least one temperature sensor to the battery management system.

15. The method of claim 13 or 14, further comprising:
using the battery management system to control rate or duration of charging the electrochemical cell in response to measurement data from the strain gauge.
